# EUROPEAN PATENT SPECIFICATION

(11) **EP 3 681 243 B1**
(45) Date of publication and mention of the grant of the patent: **15.11.2023**
(21) Application number: 20150399.2
(22) Date of filing: 07.01.2020
(51) Int. Cl.: H04W 76/19, H04W 36/30, H04W 36/00

(54) **IMPROVING COMMUNICATION EFFICIENCY**
VERBESSERUNG DER KOMMUNIKATIONSEFFIZIENZ
AMÉLIORATION DE L'EFFICACITÉ DE COMMUNICATION

(30) Priority: 10.01.2019 US 201962790715 P
(43) Date of publication of application: 15.07.2020
(73) Proprietor: Nokia Technologies Oy, 02610 Espoo (FI)
(72) Inventor: VIRTEJ, Elena, 02100 Espoo (FI); SÄILY, Mikko, 07150 Laukkoski (FI); HAILU, Sofonias, 02770 Espoo (FI)
(74) Representative: Nokia EPO representatives

(56) References cited:
- WO-A1-2018/197097
- US-A1- 2015 271 717
- INTEL CORPORATION: "NW controlled autonomous handover", 3GPP DRAFT; R2-1703414, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Spokane, USA; 20170403 - 20170407 3 April 2017 (2017-04-03), XP051245270, Retrieved from the Internet: URL:http://www.3gpp.org/ftp/Meetings_3GPP_ SYNC/RAN2/Docs/ [retrieved on 2017-04-03]
- NOKIA ET AL: "Considerations for failure recovery in LTE", 3GPP DRAFT; R2-1817688 CONSIDERATIONS FOR FAILURE RECOVERY IN LTE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRAN , vol. RAN WG2, no. Spokane, US; 20181112 - 20181116 12 November 2018 (2018-11-12), XP051557212, Retrieved from the Internet: URL:http://www.3gpp.org/ftp/Meetings%5F3GP P%5FSYNC/RAN2/Docs/R2%2D1817688%2Ezip [retrieved on 2018-11-12]

## Description

### TECHNICAL FIELD

The invention relates to communications.

### BACKGROUND

In a wireless network, handovers are performed frequently. Timing of handovers may be crucial for continued service. For example, at some point user equipment may need to start re-establishment towards a target cell, wherein the re-establishment is initiated by expiry of a timer. It is therefore beneficial to provide solutions that target to improve the functionality of this re-establishment procedure and the timer. Improvement(s) in re-establishment procedure and the functionality of timer may be applicable generally to re-establishment procedure and not necessarily restricted to handovers. Documents US2015/271717 and WO2018/197097 discuss handover related issues.

### BRIEF DESCRIPTION

According to an aspect, there is provided the subject matter of the independent claims. Some embodiments are defined in the dependent claims.

One or more examples of implementations are set forth in more detail in the accompanying drawings and the description below. Other features will be apparent from the description and drawings, and from the claims.

### BRIEF DESCRIPTION OF DRAWINGS

In the following some embodiments will be described with reference to the attached drawings, in which
Figure 1 illustrates an example a wireless communication system to which embodiments of the invention may be applied;
Figure 2 illustrates a flow diagram according to some embodiments;
Figures 3 and 4 illustrate some embodiments;
Figures 5 and 6 illustrate flow diagrams according to some embodiments; and
Figures 7 and 8 illustrate apparatuses according to some embodiments.

### DETAILED DESCRIPTION OF SOME EMBODIMENTS

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

In the following, different exemplifying embodiments will be described using, as an example of an access architecture to which the embodiments may be applied, a radio access architecture based on long term evolution advanced (LTE Advanced, LTE-A) or new radio (NR) (or can be referred to as 5G), without restricting the embodiments to such an architecture, however. It is obvious for a person skilled in the art that the embodiments may also be applied to other kinds of communications networks having suitable means by adjusting parameters and procedures appropriately. Some examples of other options for suitable systems are the universal mobile telecommunications system (UMTS) radio access network (UTRAN or E-UTRAN), long term evolution (LTE, the same as E-UTRA), wireless local area network (WLAN or WiFi), worldwide interoperability for microwave access (WiMAX), Bluetooth^{®}, personal communications services (PCS), ZigBee^{®}, wideband code division multiple access (WCDMA), systems using ultra-wideband (UWB) technology, sensor networks, mobile ad-hoc networks (MANETs) and Internet Protocol multimedia subsystems (IMS) or any combination thereof.

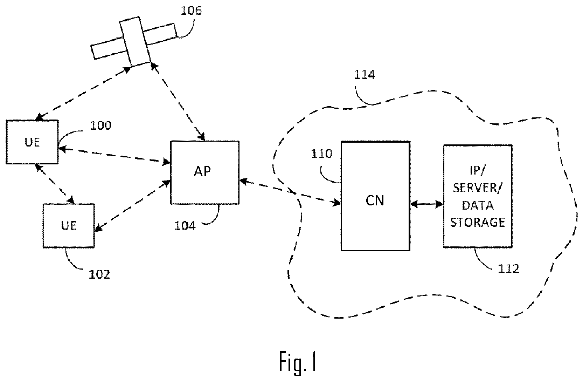

Figure 1 depicts examples of simplified system architectures only showing some elements and functional entities, all being logical units, whose implementation may differ from what is shown. The connections shown in Figure 1 are logical connections; the actual physical connections may be different. It is apparent to a person skilled in the art that the system typically comprises also other functions and structures than those shown in Figure 1.

The embodiments are not, however, restricted to the system given as an example but a person skilled in the art may apply the solution to other communication systems provided with necessary properties.

The example of Figure 1 shows a part of an exemplifying radio access network.

Figure 1 shows user devices 100 and 102 configured to be in a wireless connection on one or more communication channels in a cell with an access node 104 (such as (e/g)NodeB) providing the cell. The physical link from a user device to a (e/g)NodeB is called uplink (UL) or reverse link and the physical link from the (e/g)NodeB to the user device is called downlink or forward link. It should be appreciated that (e/g)NodeBs or their functionalities may be implemented by using any node, host, server or access point etc. entity suitable for such a usage. Said node 104 may be referred to as network node 104 or network element 104 in a broader sense.

A communications system typically comprises more than one (e/g)NodeB in which case the (e/g)NodeBs may also be configured to communicate with one another over links, wired or wireless, designed for the purpose. These links may be used for signalling purposes. The (e/g)NodeB is a computing device configured to control the radio resources of communication system it is coupled to. The (e/g)NodeB includes or is coupled to transceivers. From the transceivers of the (e/g)NodeB, a connection is provided to an antenna unit that establishes bi-directional radio links to user devices. The antenna unit may comprise a plurality of antennas or antenna elements. The (e/g)NodeB is further connected to core network 110 (CN or next generation core NGC). Depending on the system, the counterpart on the CN side can be a user plane function (UPF) (this may be 5G gateway corresponding to serving gateway (S-GW) of 4G) or access and mobility function (AMF) (this may correspond to mobile management entity (MME) of 4G).

The user device 100, 102 (also called UE, user equipment, user terminal, terminal device, mobile termination, etc.) illustrates one type of an apparatus to which resources on the air interface are allocated and assigned, and thus any feature described herein with a user device may be implemented with a corresponding apparatus, such as a part of a relay node. An example of such a relay node is an integrated access and backhaul (IAB) -node (a.k.a. self-backhauling relay).

The user device typically refers to a portable computing device that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a user device may also be a nearly exclusive uplink only device, of which an example is a camera or video camera loading images or video clips to a network. A user device may also be a device having capability to operate in Internet of Things (IoT) network which is a scenario in which objects are provided with the ability to transfer data over a network without requiring human-to-human or human-to-computer interaction. The user device (or in some embodiments mobile terminal (MT) part of the relay node) is configured to perform one or more of user equipment functionalities. The user device may also be called a subscriber unit, mobile station, remote terminal, access terminal, user terminal or user equipment (UE) just to mention but a few names or apparatuses.

Various techniques described herein may also be applied to a cyber-physical system (CPS) (a system of collaborating computational elements controlling physical entities). CPS may enable the implementation and exploitation of massive amounts of interconnected ICT devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

It should be understood that, in Figure 1, user devices may have one or more antennas. The number of reception and/or transmission antennas may naturally vary according to a current implementation.

Additionally, although the apparatuses have been depicted as single entities, different units, processors and/or memory units (not all shown in Figure 1) may be implemented.

5G enables using multiple input - multiple output (MIMO) antennas, many more base stations or nodes than the LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications, including vehicular safety, different sensors and real-time control. 5G is expected to have multiple radio interfaces, namely below 6GHz, cmWave and mmWave, and also being integradable with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, below 6GHz - cmWave - mmWave). One of the concepts considered to be used in 5G networks is network slicing in which multiple independent and dedicated virtual sub-networks (network instances) may be created within the same infrastructure to run services that have different requirements on latency, reliability, throughput and mobility.

The current architecture in LTE networks is fully distributed in the radio and fully centralized in the core network. The low latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks, such as a public switched telephone network or the Internet 112, or utilise services provided by them. The communication network may also be able to support the usage of cloud services, for example at least part of core network operations may be carried out as a cloud service (this is depicted in Figure 1 by "cloud" 114). The communication system may also comprise a central control entity, or a like, providing facilities for networks of different operators to cooperate for example in spectrum sharing.

Edge cloud may be brought into radio access network (RAN) by utilizing network function virtualization (NVF) and software defined networking (SDN). Using edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at the RAN side and non-real time functions being carried out in a centralized manner.

It should also be understood that the distribution of labour between core network operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where MEC servers can be placed between the core and the base station or nodeB (gNB). It should be appreciated that MEC can be applied in 4G networks as well.

5G may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, or ensuring service availability for critical communications, and future railway/maritime/aeronautical communications. Satellite communication may utilize geostationary earth orbit (GEO) satellite systems, but also low earth orbit (LEO) satellite systems, in particular mega-constellations (systems in which hundreds of (nano)satellites are deployed). Each satellite 106 in the mega-constellation may cover several satellite-enabled network entities that create on-ground cells. The on-ground cells may be created through an on-ground relay node or by a gNB located on-ground or in a satellite.

It is obvious for a person skilled in the art that the depicted system is only an example of a part of a radio access system and in practice, the system may comprise a plurality of (e/g)NodeBs, the user device may have an access to a plurality of radio cells and the system may comprise also other apparatuses, such as physical layer relay nodes or other network elements, etc. At least one of the (e/g)NodeBs or may be a Home(e/g)nodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of Figure 1 may provide any kind of these cells. A cellular radio system may be implemented as a multilayer network including several kinds of cells. Typically, in multilayer networks, one access node provides one kind of a cell or cells, and thus a plurality of (e/g)NodeBs are required to provide such a network structure.

For fulfilling the need for improving the deployment and performance of communication systems, the concept of "plug-and-play" (e/g)NodeBs has been introduced. Typically, a network which is able to use "plug-and-play" (e/g)Node Bs, includes, in addition to Home (e/g)NodeBs (H(e/g)nodeBs), a home node B gateway, or HNB-GW (not shown in Figure 1). A HNB Gateway (HNB-GW), which is typically installed within an operator's network may aggregate traffic from a large number of HNBs back to a core network.

Currently, T310 timer (or can be referred to as timer T310) is used in LTE solutions as Radio Link Failure (RLF) timer. That is, once T310 timer expires, the UE may determine and/or indicate that it has experienced or experiences RLF. T310 timer may be started in LTE upon detecting downlink (DL) radio link physilca layer problems(s). For example, T310 timer may be started in response to and/or after detecting N310 (i.e. certain number) consecutive out-of-sync samples, for example, of a hypothetical Physical Downlink Control Channel (PDCCH) Block Error Rate (BLER) error of 10%. Drawback may be that there is a long reaction time for determining the RLF in in case a DL physical problem is identified and that the T310 starts only when N310 consecutive out-of-sync samples are identified.

Hence, T312 timer is introduced which may terminate the T310 timer early. Termination here may mean that once T312 timer expires (i.e. upon T312 timer expiring), the expiry may trigger the RLF even if the T310 timer is running (i.e. has not yet expired). T312 timer may reduce UE outage time and speed up recovery from RLF. T312 is a timer that will shorten the time UE will wait for handover (HO) command, if the HO was initiated while T310 started. However, use of T312 timer does not come without its drawbacks. Advantageously, the inventors have realized that currently T312 starts if the measurement report (i.e. event for triggering T312 timer) is triggered while T310 timer is running. Additionally, they have realized that use of T312 timer does not improve the connection establishment where the N310 consecutive out-of-sync samples occurs after detecting the triggering event for T312. Therefore, there is proposed a solution for enhancing the use of T312 timer in relation with T310 timer. It is noted that such solution may be applicable to other technologies utilizing similar timers but with different names. For example, 5G may utilize similar timers which may or may not have the same names. Therefore, according to an aspect the used terms need to be understood in context of the example system which in this case may be an LTE system. In more general terms, reference may be made to a first timer (i.e. meaning T310 timer or similar RLF timer or RLF related timer) and to a second timer (i.e. meaning T312 timer or similar timer that terminates the first timer).

Therefore, there is provided a solution for enhancing second timer control. The solution may at least reduce the one or more problems that were indicated above.

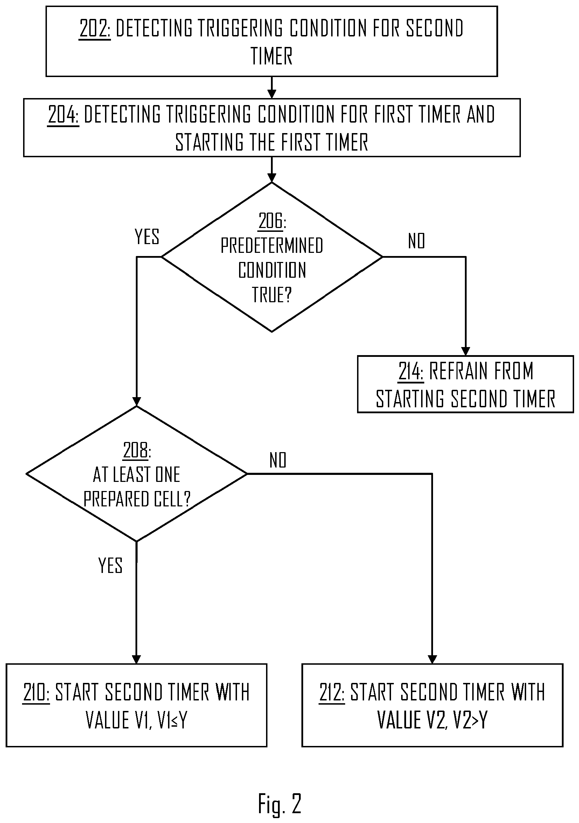

Figure 2 illustrates a flow diagram according to some embodiments. Referring to Figure 2, a method in a user equipment of a wireless communication network is shown, the method comprising: detecting (block 202) a triggering condition for a second timer for initiating a re-establishment procedure before expiry of a first timer that is a radio link failure related timer; detecting (block 204) a triggering condition for the first timer and starting the first timer, wherein the detecting the triggering condition for the second timer is performed prior to detecting the triggering condition for the first timer; based on detecting the triggering condition for the first timer, determining (block 206) whether a predetermined condition regarding the triggering condition for the second timer is true; upon determining that the predetermined condition is true, determining (block 208) whether there is at least one prepared cell; and in case there is at least one prepared cell, starting (block 210) the second timer with a value (i.e. value V1) that is lower than or equal to a predetermined value (i.e. value Y), or otherwise, starting (block 212) the second timer with a value (i.e. value V2) greater than the predetermined value (i.e. value Y).

V1 < V2, V1 ≤ Y and V2 > Y. V1, V2 and Y may be time values and indicate duration, for example, in milliseconds (ms). For example, V1 = 0ms or very close to zero. If, for example, V1 = 0, the second timer may expire immediately and hence the action, triggered by the second timer, may be initiated immediately after or at the same time with block 210. If, however, value V2 is used, the action may be initiated after the second timer expires after V2 duration has passed. The action (i.e. triggered by expiry of the second timer) may refer to, for example, re-establishment to a cell or handover to a cell. The at least one prepared cell may refer to at least one prepared cell for handover or for connection re-establishment. Moreover, the at least one prepared cell may mean a list of cells, wherein the list comprises one or more prepared cells. It is noted that in some cases and/or occasions the list may be empty.

In an embodiment, the predetermined value is zero. So, Y = 0. In such case the second timer may be started with value zero and may expire immediately.

In an embodiment, block 206 is performed immediately after block 204. Hence, based on detecting the triggering condition for the first timer may be understood as upon detecting the triggering condition, performing block 206.

In an embodiment, block 206 is performed substantially simultaneously with block 204. Substantially here may refer to normal delay in processing operations performed by one or more processing circuitries of the UE. Hence, substantially simultaneously may refer to situation in which the blocks 204, 206 are configured to be performed simultaneously.

As is understood by the skilled person, based on -structure comprises both aforementioned embodiments. Hence, in an embodiment the second timer is started substantially simultaneously with the first timer. In an embodiment, the determining whether the predetermined condition regarding the triggering condition for the second timer is true is performed upon starting the first timer.

The user equipment of Figure 2 may refer to a circuitry of UE 100, 102 or to the UE 100, 102 itself. Wireless communication network may refer to the wireless network of Figure 2, and can be or comprise, for example, LTE network and/or 5G network.

Still referring to Figure 2, the detecting in block 202 and/or in block 204 may be based on measurement(s) performed by the UE. For example, the detection of block 202 may be based on radio measurement(s) performed by the UE prior to the detection of the triggering condition for the first timer or second timer. Essentially, the detection of the conditions of blocks 202, 204 may be based on performed measurements. Hence, the UE may be configured to monitor and perform measurements regarding the second timer before the first timer has been triggered. For example, based on the detection of block 202, the UE may set a second timer related flag (e.g. *use second timer* flag) to true. As the flag is true, the second timer may later be started if condition of block 206 is true. The value may depend on determination of block 208 as was explained earlier. The benefit is that the UE may not need to perform the measurement(s) (i.e. again) regarding the second timer if the flag is true. Hence, time can be saved as the measurement(s) are performed earlier, and recovery from RLF may be faster. However, it is noted that in some cases the UE may perform same or similar measurement(s) in block 206 as it performs for block 202. Some of the options are discussed below in more detail.

Still referring to Figure 2, according to an embodiment, if the predetermined condition is not true (block 206), the process may continue to block 214, and the UE may refrain from starting the second timer as indicated in block 214. Refraining may mean that the second timer is not started as the condition of block 206 is not true. The T312 timer may however be started later, if the triggering condition for the T312 is detected to be true later.

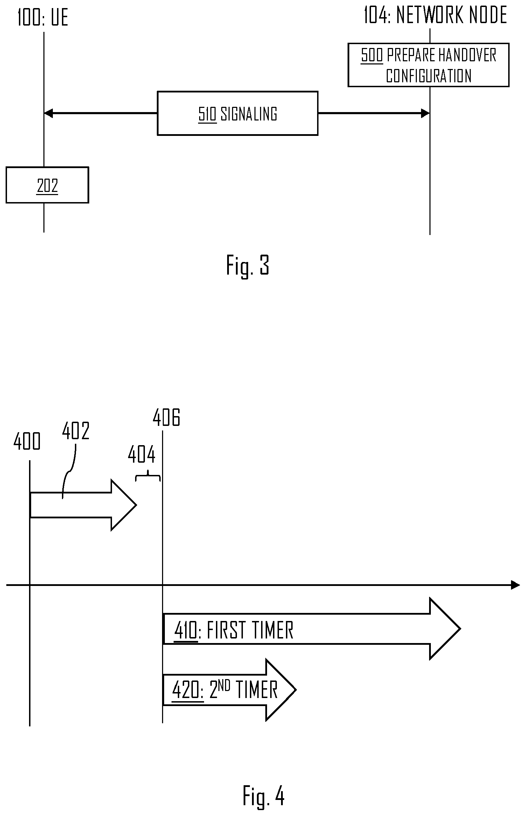

Figures 3, 4, 5, and 6 illustrate some embodiments. Let us first look at the signaling diagram of Figure 3. According to an aspect, there is provided a method at a network node (e.g. 104) of the wireless network, the method comprising: preparing (block 500) handover configuration for a user equipment (e.g. 100, 102), the configuring comprising: indicating (block 510) to the user equipment triggering conditions for first and second timers, the second timer for initiating a re-establishment procedure before expiry of the first timer that is a radio link failure related timer; configuring the user equipment to monitor the triggering condition of the second timer prior to detecting the triggering condition for the first timer; and configuring the user equipment to determine, based on detecting the triggering condition for the first timer, whether a predetermined condition regarding the triggering condition for the second timer is true before starting the second timer. The indication and configuration may happen via the signaling of block 510. After the configuring, the UE 100 may proceed to perform measurements and possibly detect (block 202) the triggering condition based at least partially on the configuration by the network node 104.

Referring to Figure 4, time instants 400 and 406 are shown. At time instant 400, the UE may start Time To Trigger (TTT) timer 402 of A3 event. For example, the measurement(s) may comprise Reference Signal Received Power (RSRP), Received Signal Strength Indicator (RSSI), and/or Reference Signal Received Quality (RSRQ) measurement(s). Naturally, the triggering condition may be based on a value(s) that is relevant and/or comparable for these measurement(s). Expiry of TTT timer 402 may denote the detection of block 202, i.e. in that time instant the UE may detect that the condition for the second timer is true. This detection may be based on measurement(s) performed by the UE earlier, but the TTT timer 402 may be used to make sure that the triggering condition holds for a certain time period (i.e. the TTT time period). As noted above, the flag may be raised or set true after TTT timer 402 expires. Although TTT time 402 of A3 event is used here as an example, it is possible to utilize some other trigger events or triggering condition for the second timer for example based on the 3GPP Technical Specification 38.331. For example, the triggering condition may be fulfilled if a threshold or offset value is exceeded in one or more measurements.

In an embodiment, the predetermined condition (block 206) is true if a duration 404 between detecting the triggering conditions for the first and second timers 410, 420 is less than or equal to a predetermined threshold. As an example, the duration 404 can be an independent value or alternatively a scaled or relative value to the timer 402, e.g. 0, 40, 64, 80, 100, 128, 160, 256, 320, 480, 512, 640, 1024, 1280, 2560, 5120 milliseconds, or possibly a higher value. One example of this is shown in Figure 4. That is, time duration 404 is shown between detecting the triggering condition for the second timer 420 (i.e. end of arrow 402 in the example of Figure 4) and detecting the triggering condition for the first timer 410 at time instant 406. It is noted and as explained above e.g. in block 204 that first timer 410 is started upon detecting the triggering condition for the first timer 410. In a way, duration 404 reflects validity of the measurement report related to the second timer 420. Referring still to Figure 4, it is shown that the second timer 420 is started substantially simultaneously with the first timer 410 (i.e. at 406). However, the second timer 420 may be alternatively started upon starting the first timer 410. It is also shown that the second timer 420 runs for a certain time period. However, it is possible that the second timer value is zero, and thus it may expire instantly after starting. In a way, if the value is zero, it can be understood that the second timer 420 never started, but only expires after or instantly at activation. Skilled person understands this special case. Furthermore, the first timer 410 may be terminated when the second timer 420 expires although it is shown to continue after second timer 420 expires.

In an embodiment, the predetermined condition (block 206) is true if the triggering condition for the second timer 420 is still valid. This may mean that the triggering condition for the second timer 420 is still valid at time instant 406 or soon after.

In an embodiment, the predetermined condition (block 206) is true if at least one of the following conditions is true: the duration 404 between detecting the triggering conditions for the first and second timers 410, 420 is less than or equal to a predetermined threshold; and the triggering condition for the second timer 420 is still valid (i.e. at 406). If both conditions are not true, the UE 100 may refrain from starting the second timer (block 214).

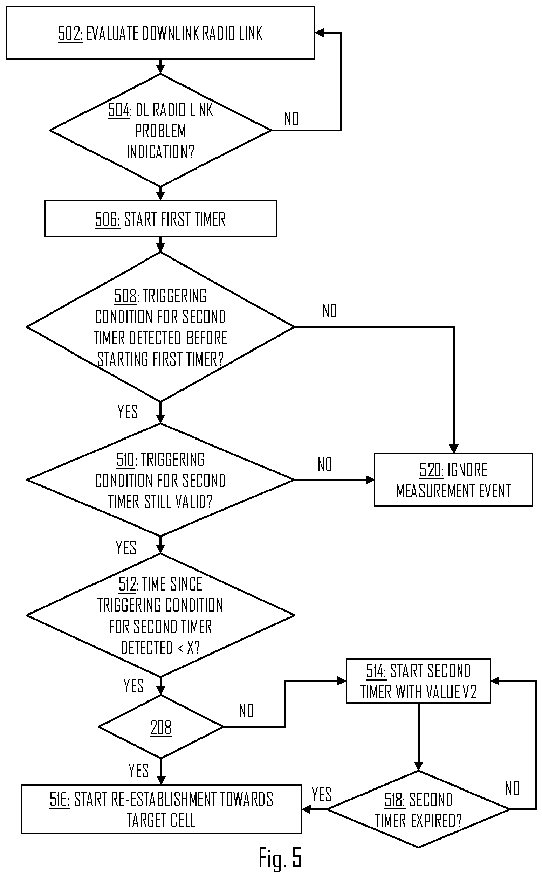

Referring now to Figure 5, in block 502 the UE 100 may evaluate DL radio link. If problem(s) are detected (block 504), the process may continue to starting the first timer (block 506; i.e. same or similar as block 204). If not, the UE 100 may continue the evaluation of block 502.

In block 508, if the triggering condition for second timer was detected before starting the first timer, the process may continue to block 510. Otherwise, the process may continue to block 520 in which the measurement event (i.e. second timer triggering condition true) is ignored. This may mean that the second timer is not started nor activated.

As noted above, the UE 100 may utilize one or two phase process to determine whether to start the second timer 420 or not. In block 510, the UE 100 may determine whether the triggering condition for second timer 420 is still valid. If yes, process may continue to starting the second timer 420 or to block 512. If no, the process may continue to block 520. For block 510, the UE 100 may perform measurements regarding the triggering condition for the second timer 420.

In block 512, the UE 100 may determine whether the duration 404 is less than or equal to a predetermined threshold. In block 512, the predetermined threshold is indicated with X. In an embodiment, the duration needs to be less than X, i.e. 404<X for the process to continue to block 208.

It is noted that blocks 510, 512 could be other way around so that first it would be determined whether the duration 404 is less than or equal to the predetermined threshold and if so, the process would continue to block 208. However, if duration would be longer than the predetermined threshold, the process would continue to block 510 in which the validity of the condition would be checked. Based then on the validity of the condition, the process may continue to block 208 or to block 520.

In block 208, the determination may be similar as was explained in Figure 2. I.e. if there is at least one prepared cell, the process may continue to block 516, otherwise the process may continue to block 514.

In block 514, the second timer 420 may be started with value V2. This may be similar or same as block 212.

In block 516, the UE 100 may start re-establishment towards a cell (e.g. target cell). The re-establishment of block 516 may start upon expiry of second timer 420. So, the re-establishment may be started towards the target cell that triggered that event. Further, if the event triggers for a cell in the prepared cell list (e.g. signaled to the UE), the UE can initiate the re-establishment immediately, e.g. prioritize cells in the list over other cells not in the prepared cell list. Otherwise, UE may first start the second timer and initiate re-establishment at expiry of the second timer.

In an embodiment, based on block 208, the re-establishment starts immediately as value V1 is set to zero. This example is illustrated in Figure 5 (i.e. from block 208 to block 516).

If the process continues to block 512, the process may further continue to block 516 upon expiry of the second timer in block 518.

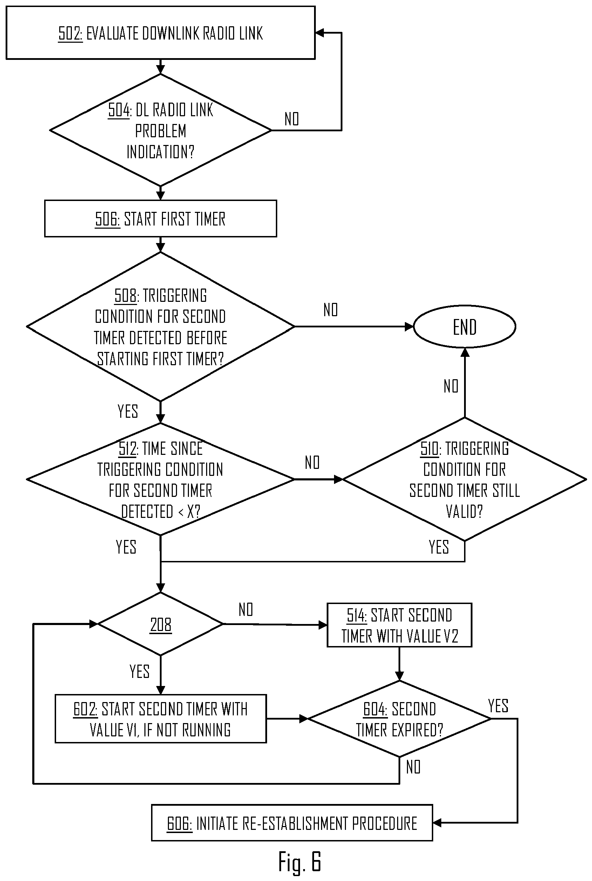

Referring to Figure 6, the shown process may be a bit different than in Figure 5. For example, process is shown to end if determination in block 508 and/or block 510 is negative. This may effectively mean the same thing as block 520; i.e. the second timer 420 is not started.

Further, in an embodiment with reference to Figure 6, the UE 100 determines (based on block 512) that the duration between detecting the triggering conditions for the first and second timers is greater than the predetermined threshold (i.e. greater than X); and in response to the determining that the duration is greater than the predetermined threshold, determines (block 510) whether the triggering condition for the second timer is still valid, wherein the predetermined condition is true if the triggering condition for the second timer is still valid. If the triggering condition is still valid, the process may continue to block 208, otherwise the process may end. However, if the duration between the triggering conditions for the second timers is less than or equal to the predetermined threshold, the process may continue directly from block 512 to block 208. Therefore, additional measurement(s) for block 510 may not be needed.

In an embodiment, with reference to Figures 2, 3, 4, 5 and 6, the triggering condition for the second timer 420 is determined to be still valid (e.g. in block 510) if a leaving condition regarding the second timer 420 has not triggered.

In an embodiment, the predetermined condition is not true if the triggering condition for the second timer 420 is invalid at the time of and/or upon detecting (i.e. at block 204 or 506) the triggering condition for the first timer. So, in this embodiment, the checking of block 206 or 510 may be performed substantially at the same time as block 204 or 506.

In an embodiment, the predetermined condition is not true if both of the following conditions are met: the duration between detecting the triggering conditions for the first and second timers is greater than the predetermined threshold (e.g. checked at block 512), and the triggering condition for the second timer is invalid (e.g. checked at block 510).

In an embodiment, with reference to Figures 5 and 6, the UE 100 initiates (block 516), based on the second timer 420 value, the re-establishment procedure towards a cell for which the triggering condition for the second timer was detected. Based on the second timer 420 value may mean, for example, that the re-establishment is initiated in response to expiry of the second timer 420. Based on the second timer 420 value may also comprise the case in which the second timer 420 value is set to zero and expires immediately. Said cell for which the triggering condition for the second timer 420 was detected may refer to the cell that the UE 100 measures, and based on the measurement detects that the condition for triggering the second timer (e.g. at block 202).

In an embodiment with reference to Figure 6, if time between detecting triggering conditions for the first and second timers 410, 420 (e.g. time interval between blocks 202 and 204; in other words time interval between triggering measurement report and starting the first timer 410) is greater than the predetermined threshold, the UE 100 checks an additional condition. The additional condition may be, for example, to check whether or not the UE 100 is at cell boundary. This may mean, for example, that the UE performs radio measurement(s) (e.g. RSRP measurement) to determine whether or not the UE is at cell boundary. If UE is at cell boundary, the second timer 420 may be started with value V1 if there is a prepared cell or with value V2 if there is not a prepared cell. There is a prepared cell if the cell which is measured is in the prepared list of cells.

If however, the UE is not at cell boundary, the second timer 420 may not be started.

Further, if said time is less than or equal to the predetermined threshold, the second timer 420 may be started with value V1 if there is a prepared cell or with value V2 if there is not a prepared cell.

V1 may be less than V2. In an embodiment, V1 = 0, as was discussed earlier.

One benefit of the additional cell boundary check may be that the measurements are anyway ongoing already (when monitoring the event related to second timer 420 in block 510), so no additional delay from the measurements is expected.

In an embodiment, a prepared cell is a cell that is indicated to the user equipment as part of conditional handover signalling. Hence, for example, the network node 104 signals and/or indicates said at least one prepared cell (e.g. list of prepared cells) to the UE 100.

In an embodiment, a prepared cell is a cell that is indicated to the UE. This may be performed, for example, by network node 104 signaling an indication of the prepared cell(s) to the UE. This may be performed also via explicit signaling and thus not necessarily as a part of conditional handover signaling.

In an example embodiment, the network node 104 sends the list of cells with proactively prepared cells for fast Radio Resource Control (RRC) re-establishment to the UE 100. In conditional handover, the list of prepared cells may be provided in handover command. In other cases, the list of cells with proactive context might be provided, and updated, using a dedicated RRC signaling or as part of other RRC messages, such as RRC Reconfiguration, by the network node 104 that prepared the cells.

Some of the advantages of the proposed solution may comprise:
- In the situation where measurement event (i.e. for the second timer 420) has triggered before the radio link problem, early radio link failure/recovery may be started earlier than with current solutions.
- Prepared cells may be prioritized over non-prepared cells. So, if the cell exists in the prepared cell list, second timer 420 may be started with lower value than in the cases where the cell is not in the prepared cell list. This is beneficial especially if there are cells that are prepared for conditional handover, as the UE is already aware of such cells, or cells with proactively prepared context that the UE is informed about by the base stations that prepared the cells.
- False alarms regarding initiating the second timer 420 may be avoided or reduced. For example, in conditional handover, the measurement report might be triggered early. First timer 410 might be initiated due to a non-cell border issues, e.g. a large time might have already elapsed after measurement triggering, and the UE is in cell center and the radio link degradation that lead to the initiation of the first timer is caused by shadowing.

Furthermore, the timers T310 and T312 have been specified in the first place because immediate UE autonomous action is not in general optimal. The price for uncontrolled emergency handover may be an interruption in the user data. Therefore, the proposal may beneficially keep control of the handover at the network, e.g. by means of the network configuring the timers to the UE.

In an embodiment, the first timer 410 is a T310 timer and the second timer 420 is a T312 timer.

According to an aspect, there is provided a method in user equipment of a wireless communication network, the method comprising: detecting a triggering condition for a T312 timer; detecting a triggering condition for a T310 timer and starting the T310 timer, wherein the detecting the triggering condition for the T312 timer is performed prior to detecting the triggering condition for the T310 timer; based on detecting the triggering condition for the T310 timer, determining whether a predetermined condition regarding the triggering condition for the T312 timer is true; upon determining that the predetermined condition is true, determining whether a list of prepared cells for handover comprises a cell regarding which the triggering condition for T312 timer was detected; and in case the list of prepared cells comprises the cell, starting the T312 timer with a value that is lower than or equal to a predetermined value, or in case the list of prepared cells excludes the cell, starting the T312 timer with a value higher than the predetermined value.

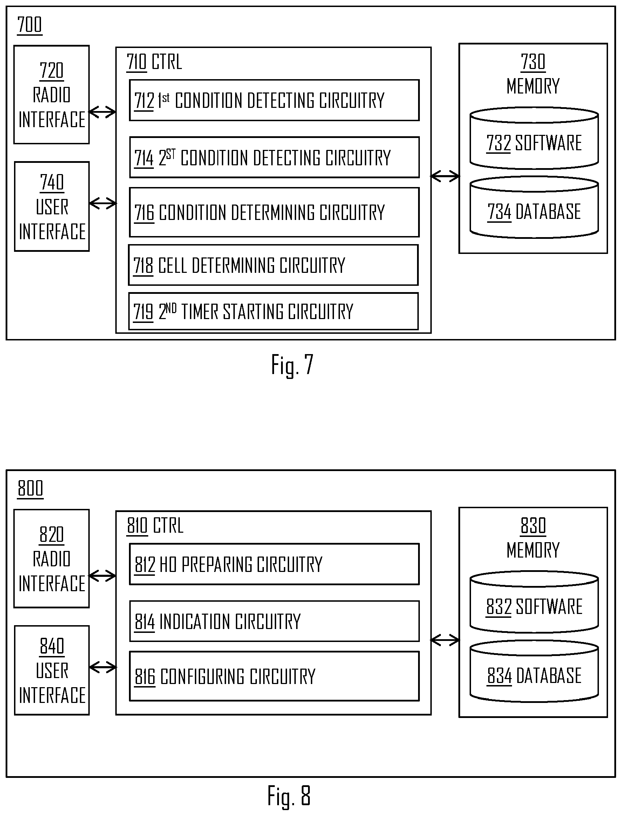

Figures 7 and 8 provide apparatuses 700, 800 comprising a control circuitry (CTRL) 710, 810, such as at least one processor, and at least one memory 730, 830 including a computer program code (software) 732, 832, wherein the at least one memory and the computer program code (software) 732, 832, are configured, with the at least one processor, to cause the respective apparatus 700, 800 to carry out any one of the embodiments described above, such as with reference to Figures 1 to 6, or operations thereof.

Referring to Figures 7 and 8, the memory 730, 830 may be implemented using any suitable data storage technology, such as semiconductor based memory devices, flash memory, magnetic memory devices and systems, optical memory devices and systems, fixed memory and removable memory. The memory 730, 830 may comprise a database 734, 834 for storing data. For example, the list of prepared cells (referred to also as prepared cell list, for example) may be stored in the database.

The apparatus 700, 800 may further comprise radio interface (TRX) 720, 820 comprising hardware and/or software for realizing communication connectivity according to one or more communication protocols. The TRX may provide the apparatus with communication capabilities to access the radio access network and enable communication between network nodes, for example. The TRX may comprise standard well-known components such as an amplifier, filter, frequency-converter, (de)modulator, and encoder/decoder circuitries and one or more antennas.

The apparatus 700, 800 may also comprise user interface 740, 840 comprising, for example, at least one keypad, a microphone, a touch display, a display, a speaker, etc. The user interface 740, 840 may be used to control the respective apparatus by a user of the apparatus 700, 800.

In an embodiment, the apparatus 700 may be or be comprised in a UE, such as the UE 100 or 102.

According to an embodiment, the CTRL 710 comprises a first condition detecting circuitry 712 configured at least to cause performing operations described with respect to block 202; a second condition detecting circuitry 714 configured at least to cause performing operations described with respect to block 204; a condition determining circuitry 716 configured at least to cause performing operations described with respect to block 206; a cell determining circuitry 718 configured at least to cause performing operations described with respect to block 208; and a second timer starting circuitry 719 configured at least to cause performing operations described with respect to block 210 and/or block 212.

In an embodiment, the apparatus 800 may be or be comprised in a base station (also called a base transceiver station, a Node B, a radio network controller, an evolved Node B, or a g Node B, for example). The apparatus 800 may be the network node 104 or comprised in the network node 104, for example.

According to an embodiment, the CTRL 810 comprises a handover preparing circuitry 812 configured to prepare handover configuration for a user equipment; an indication circuitry 814 configured to indicate, to the user equipment, triggering conditions for first and second timers, the second timer for initiating a re-establishment procedure before expiry of the first timer that is a radio link failure related timer; and a configuring circuitry 816 configured to configure the user equipment to monitor the triggering condition of the second timer prior to detecting the triggering condition for the first timer, and to configure the user equipment to determine, based on detecting the triggering condition for the first timer, whether a predetermined condition regarding the triggering condition for the second timer is true before starting the second timer.

In an embodiment, at least some of the functionalities of the apparatus 800 may be shared between two physically separate devices, forming one operational entity. Therefore, the apparatus 800 may be seen to depict the operational entity comprising one or more physically separate devices for executing at least some of the described processes. Thus, the apparatus 900 utilizing such shared architecture, may comprise a remote control unit (RCU), such as a host computer or a server computer, operatively coupled (e.g. via a wireless or wired network) to a remote radio head (RRH), such as a Transmission Point (TRP), located in a base station or network node 104, for example. In an embodiment, at least some of the described processes may be performed by the RCU. In an embodiment, the execution of at least some of the described processes may be shared among the RRH and the RCU.

In an embodiment, the RCU may generate a virtual network through which the RCU communicates with the RRH. In general, virtual networking may involve a process of combining hardware and software network resources and network functionality into a single, software-based administrative entity, a virtual network. Network virtualization may involve platform virtualization, often combined with resource virtualization. Network virtualization may be categorized as external virtual networking which combines many networks, or parts of networks, into the server computer or the host computer (i.e. to the RCU). External network virtualization is targeted to optimized network sharing. Another category is internal virtual networking which provides network-like functionality to the software containers on a single system.

In an embodiment, the virtual network may provide flexible distribution of operations between the RRH and the RCU. In practice, any digital signal processing task may be performed in either the RRH or the RCU and the boundary where the responsibility is shifted between the RRH and the RCU may be selected according to implementation.

According to an aspect there is provided a system comprising one or more apparatuses 700 and one or more apparatuses 800. In an embodiment, the system comprises a plurality of apparatuses 700.

According to an aspect there is provided a method in user equipment of a wireless communication network, the method comprising: detecting a triggering condition for a second timer for initiating a re-establishment procedure before expiry of a first timer that is a radio link failure related timer; detecting a triggering condition for the first timer and starting the first timer, wherein the detecting the triggering condition for the second timer is performed prior to detecting the triggering condition for the first timer; based on detecting the triggering condition for the first timer, determining whether a predetermined condition regarding the triggering condition for the second timer is true; upon determining that the predetermined condition is true, determining whether there is at least one prepared cell; in case there is at least one prepared cell, starting the second timer with a value that is lower than or equal to a predetermined value, or otherwise, starting the second timer with a value greater than the predetermined value.

In an embodiment of the method, the predetermined condition is true if a duration between detecting the triggering conditions for the first and second timers is less than or equal to a predetermined threshold.

In an embodiment of the method, the predetermined condition is true if the triggering condition for the second timer is still valid.

In an embodiment, the method further comprises: determining that the duration between detecting the triggering conditions for the first and second timers is greater than the predetermined threshold; and in response to the determining that the duration is greater than the predetermined threshold, determining whether the triggering condition for the second timer is still valid, wherein the predetermined condition is true if the triggering condition for the second timer is still valid.

In an embodiment of the method, the triggering condition for the second timer is determined to be still valid if a leaving condition regarding the second timer has not triggered.

In an embodiment, the method further comprises: refraining from starting the second timer if the predetermined condition is not true.

In an embodiment of the method, the predetermined condition is not true if the triggering condition for the second timer is invalid at the time of and/or upon detecting the triggering condition for the first timer.

In an embodiment, the method further comprises: initiating, based on the second timer value, the re-establishment procedure towards a cell for which the triggering condition for the second timer was detected.

In an embodiment of the method, the predetermined value is zero.

In an embodiment of the method, the second timer is started substantially simultaneously with the first timer.

In an embodiment of the method, the determining whether the predetermined condition regarding the triggering condition for the second timer is true is performed upon starting the first timer.

In an embodiment of the method, the first timer is a T310 timer and the second timer is a T312 timer.

In an embodiment of the method, a prepared cell is a cell that is indicated to the user equipment as part of dedicated signalling or as part of conditional handover signalling.

According to an aspect, there is provided a method in network node of a wireless communication network, the method comprising: preparing handover configuration for a user equipment, the configuring comprising: indicating to the user equipment triggering conditions for first and second timers, the second timer for initiating a re-establishment procedure before expiry of the first timer that is a radio link failure related timer; configuring the user equipment to monitor the triggering condition of the second timer prior to detecting the triggering condition for the first timer; and configuring the user equipment to determine, based on detecting the triggering condition for the first timer, whether a predetermined condition regarding the triggering condition for the second timer is true before starting the second timer.

According to an aspect, there is provided an apparatus comprising: at least one processor, and at least one memory comprising a computer program code, wherein the at least one memory and the computer program code are configured, with the at least one processor, to cause a user equipment of a wireless communication network to perform operations comprising: detecting a triggering condition for a second timer for initiating a re-establishment procedure before expiry of a first timer that is a radio link failure related timer; detecting a triggering condition for the first timer and starting the first timer, wherein the detecting the triggering condition for the second timer is performed prior to detecting the triggering condition for the first timer; based on detecting the triggering condition for the first timer, determining whether a predetermined condition regarding the triggering condition for the second timer is true; upon determining that the predetermined condition is true, determining whether there is at least one prepared cell; in case there is at least one prepared cell, starting the second timer with a value that is lower than or equal to a predetermined value, or otherwise, starting the second timer with a value greater than the predetermined value.

In an embodiment of the apparatus, the predetermined condition is true if a duration between detecting the triggering conditions for the first and second timers is less than or equal to a predetermined threshold.

In an embodiment of the apparatus, the predetermined condition is true if the triggering condition for the second timer is still valid.

In an embodiment, the apparatus is further configured to perform operations comprising: determining that the duration between detecting the triggering conditions for the first and second timers is greater than the predetermined threshold; and in response to the determining that the duration is greater than the predetermined threshold, determining whether the triggering condition for the second timer is still valid, wherein the predetermined condition is true if the triggering condition for the second timer is still valid.

In an embodiment of the apparatus, the triggering condition for the second timer is determined to be still valid if a leaving condition regarding the second timer has not triggered.

In an embodiment, the apparatus is further configured to perform operations comprising: refraining from starting the second timer if the predetermined condition is not true.

In an embodiment of the apparatus, the predetermined condition is not true if the triggering condition for the second timer is invalid at the time of and/or upon detecting the triggering condition for the first timer.

In an embodiment, the apparatus is further configured to perform operations comprising: initiating, based on the second timer value, the re-establishment procedure towards a cell for which the triggering condition for the second timer was detected.

In an embodiment of the apparatus, the predetermined value is zero.

In an embodiment of the apparatus, the second timer is started substantially simultaneously with the first timer.

In an embodiment of the apparatus, the determining whether the predetermined condition regarding the triggering condition for the second timer is true is performed upon starting the first timer.

In an embodiment of the apparatus, the first timer is a T310 timer and the second timer is a T312 timer.

In an embodiment of the apparatus, a prepared cell is a cell that is indicated to the user equipment as part of dedicated signalling or as part of conditional handover signalling.

According to an aspect, there is provided an apparatus comprising: at least one processor, and at least one memory comprising a computer program code, wherein the at least one memory and the computer program code are configured, with the at least one processor, to cause a network node of a wireless communication network to perform operations comprising: preparing handover configuration for a user equipment, the configuring comprising: indicating to the user equipment triggering conditions for first and second timers, the second timer for initiating a re-establishment procedure before expiry of the first timer that is a radio link failure related timer; configuring the user equipment to monitor the triggering condition of the second timer prior to detecting the triggering condition for the first timer; and configuring the user equipment to determine, based on detecting the triggering condition for the first timer, whether a predetermined condition regarding the triggering condition for the second timer is true before starting the second timer.

According to an aspect, there is provided a computer readable medium comprising program instructions for causing an apparatus at least to perform: detecting a triggering condition for a second timer for initiating a re-establishment procedure before expiry of a first timer that is a radio link failure related timer; detecting a triggering condition for the first timer and starting the first timer, wherein the detecting the triggering condition for the second timer is performed prior to detecting the triggering condition for the first timer; based on detecting the triggering condition for the first timer, determining whether a predetermined condition regarding the triggering condition for the second timer is true; upon determining that the predetermined condition is true, determining whether there is at least one prepared cell; in case there is at least one prepared cell, starting the second timer with a value that is lower than or equal to a predetermined value, or otherwise, starting the second timer with a value greater than the predetermined value.

According to an aspect, there is provided a computer readable medium comprising program instructions for causing an apparatus at least to perform: preparing handover configuration for a user equipment, the configuring comprising: indicating to the user equipment triggering conditions for first and second timers, the second timer for initiating a re-establishment procedure before expiry of the first timer that is a radio link failure related timer; configuring the user equipment to monitor the triggering condition of the second timer prior to detecting the triggering condition for the first timer; and configuring the user equipment to determine, based on detecting the triggering condition for the first timer, whether a predetermined condition regarding the triggering condition for the second timer is true before starting the second timer.

According to an aspect, there is provided a system comprising: one or more apparatus comprising: at least one processor, and at least one memory comprising a computer program code, wherein the at least one memory and the computer program code are configured, with the at least one processor, to cause a user equipment of a wireless communication network to perform operations comprising: detecting a triggering condition for a second timer for initiating a re-establishment procedure before expiry of a first timer that is a radio link failure related timer; detecting a triggering condition for the first timer and starting the first timer, wherein the detecting the triggering condition for the second timer is performed prior to detecting the triggering condition for the first timer; based on detecting the triggering condition for the first timer, determining whether a predetermined condition regarding the triggering condition for the second timer is true; upon determining that the predetermined condition is true, determining whether there is at least one prepared cell; in case there is at least one prepared cell, starting the second timer with a value that is lower than or equal to a predetermined value, or otherwise, starting the second timer with a value greater than the predetermined value; and one or more apparatus comprising: at least one processor, and at least one memory comprising a computer program code, wherein the at least one memory and the computer program code are configured, with the at least one processor, to cause a network node of a wireless communication network to perform operations comprising: preparing handover configuration for a user equipment, the configuring comprising: indicating to the user equipment triggering conditions for first and second timers, the second timer for initiating a re-establishment procedure before expiry of the first timer that is a radio link failure related timer; configuring the user equipment to monitor the triggering condition of the second timer prior to detecting the triggering condition for the first timer; and configuring the user equipment to determine, based on detecting the triggering condition for the first timer, whether a predetermined condition regarding the triggering condition for the second timer is true before starting the second timer.

As used in this application, the term 'circuitry' refers to all of the following: (a) hardware-only circuit implementations, such as implementations in only analog and/or digital circuitry, and (b) combinations of circuits and soft-ware (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present. This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device.

In an embodiment, at least some of the processes described in connection with Figures 1 to 6 may be carried out by an apparatus comprising corresponding means for carrying out at least some of the described processes. Some example means for carrying out the processes may include at least one of the following: detector, processor (including dual-core and multiple-core processors), digital signal processor, controller, receiver, transmitter, encoder, decoder, memory, RAM, ROM, software, firmware, display, user interface, display circuitry, user interface circuitry, user interface software, display software, circuit, antenna, antenna circuitry, and circuitry. In an embodiment, the at least one processor, the memory, and the computer program code form processing means or comprises one or more computer program code portions for carrying out one or more operations according to any one of the embodiments of Figures 1 to 6 or operations thereof.

According to yet another embodiment, the apparatus carrying out the embodiments comprises a circuitry including at least one processor and at least one memory including computer program code. When activated, the circuitry causes the apparatus to perform at least some of the functionalities according to any one of the embodiments of Figures 1 to 6, or operations thereof.

The techniques and methods described herein may be implemented by various means. For example, these techniques may be implemented in hardware (one or more devices), firmware (one or more devices), software (one or more modules), or combinations thereof. For a hardware implementation, the apparatus(es) of embodiments may be implemented within one or more application-specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof. For firmware or software, the implementation can be carried out through modules of at least one chip set (e.g. procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

Embodiments as described may also be carried out in the form of a computer process defined by a computer program or portions thereof. Embodiments of the methods described in connection with Figures 1 to 6 may be carried out by executing at least one portion of a computer program comprising corresponding instructions. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electrical carrier signal, telecommunications signal, and software distribution package, for example. The computer program medium may be a transitory or non-transitory medium, for example. Coding of software for carrying out the embodiments as shown and described is well within the scope of a person of ordinary skill in the art. In an embodiment, a computer-readable medium comprises said computer program.

Even though the invention has been described above with reference to an example according to the accompanying drawings, it is clear that the invention is not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

## Claims

1. A method performed by a user equipment of a wireless communication network, the method comprising:
detecting (202) a triggering condition based on measurements for a second timer (420) with respect to a first cell, wherein the second timer is for initiating a re-establishment procedure or a handover before expiry of a first timer (410);
receiving, in a handover command from the wireless communication network and before triggering the first timer, an indication of at least one cell prepared for a conditional handover of the user equipment;
detecting (204) a triggering condition for the first timer and starting the first timer, wherein the first timer is a radio link failure related timer, and wherein detecting the measurement-based triggering condition for the second timer is performed prior to detecting the triggering condition for the first timer;
based on detecting the triggering condition for the first timer, determining that a duration between detecting the triggering conditions for the first and second timers is greater than a predetermined threshold;
in response to determining that the duration is greater than the predetermined threshold, determining (206) whether the triggering condition based on measurements for the second timer is still true for the first cell;
upon determining that the triggering condition based on measurements for the second timer is still true, determining (208) whether the first cell is one of the at least one cell prepared for the conditional handover of the user equipment; and
in case the first cell is one of the at least one cell prepared for the conditional handover, starting (210) the second timer with a value that is lower than or equal to a predetermined value,
otherwise, starting (212) the second timer with a value greater than the predetermined value.

2. An apparatus for a user equipment, the apparatus comprising means for performing:
detecting (202) a triggering condition based on measurements for a second timer (420) with respect to a first cell, wherein the second timer is for initiating a re-establishment procedure or a handover before expiry of a first timer (410);
receiving, in a handover command from the wireless communication network and before triggering the first timer, an indication of at least one cell prepared for a conditional handover of the user equipment;
detecting (204) a triggering condition for the first timer and starting the first timer, wherein the first timer that is a radio link failure related timer, and wherein detecting the triggering condition based on measurements for the second timer is performed prior to detecting the triggering condition for the first timer;
based on detecting the triggering condition for the first timer, determining that a duration between detecting the triggering conditions for the first and second timers is greater than a predetermined threshold;
in response to determining that the duration is greater than the predetermined threshold, determining (510) whether the triggering condition based on measurements for the second timer is still true for the first cell;
upon determining that the triggering condition based on measurements for the second timer is still true, determining (208) whether the first cell is one of the at least one cell prepared for the conditional handover of the user equipment; and
in case the first cell is one of the at least one cell prepared for the conditional handover, starting (210) the second timer with a value that is lower than or equal to a predetermined value, or
otherwise, starting (212) the second timer with a value greater than the predetermined value.

3. The apparatus of claim 2, further comprising means for performing:
refraining from starting the second timer if the triggering condition based on measurements for the second timer is not true.

4. The apparatus of claim 3, wherein the triggering condition based on measurements for the second timer is not true if the triggering condition based on measurements for the second timer is invalid at the time of and/or upon detecting the triggering condition for the first timer.

5. The apparatus of any preceding claim 2 to 4, further comprising means for performing:
initiating, based on the second timer value, the re-establishment procedure or the handover towards the first cell for which the triggering condition based on measurements for the second timer was detected.

6. The apparatus of any preceding claim 2 to 5, wherein the predetermined value is zero.

7. The apparatus of any preceding claim 2 to 6, wherein the second timer is started substantially simultaneously with the first timer.

8. The apparatus of any preceding claim 2 to 7, wherein the determining whether the triggering condition based on measurements for the second timer is still true for the first cell is performed upon starting the first timer.

9. The apparatus of any preceding claim 2 to 8, wherein the first timer is a T310 timer and the second timer is a T312 timer.

10. A non-transitory computer readable medium comprising program instructions which, when executed by an apparatus, cause the apparatus at least to perform the method of claim 1.

## Patentansprüche

1. Verfahren, das von einem Endgerät eines drahtlosen Kommunikationsnetzes durchgeführt wird, wobei das Verfahren umfasst:
Erkennen (202) einer auf Messungen für einen zweiten Timer (420) basierenden auslösenden Bedingung in Bezug auf eine erste Zelle, wobei der zweite Timer dazu dient, einen Wiederherstellungsvorgangs oder ein Handover vor Ablauf eines ersten Timers (410) einzuleiten;
Empfangen, in einem Handover-Befehl von dem drahtlosen Kommunikationsnetz und vor dem Auslösen des ersten Timers, einer Angabe von mindestens einer Zelle, die für ein bedingtes Handover des Endgeräts vorbereitet ist;
Erkennen (204) einer auslösenden Bedingung für den ersten Timer und Starten des ersten Timers, wobei der erste Timer ein funkverbindungsfehlerbezogener Timer ist, und wobei das Erkennen der messungsbasierten auslösenden Bedingung für den zweiten Timer vor dem Erkennen der auslösenden Bedingung für den ersten Timer durchgeführt wird;
auf der Grundlage des Erkennens der auslösenden Bedingung für den ersten Timer, Bestimmen, dass eine Dauer zwischen dem Erkennen der auslösenden Bedingungen für den ersten und den zweiten Timer größer als ein vorbestimmter Schwellenwert ist;
als Reaktion auf das Bestimmen, dass die Dauer größer als der vorbestimmte Schwellenwert ist, Bestimmen (206), ob die auf Messungen für den zweiten Timer basierende auslösende Bedingung für die erste Zelle immer noch erfüllt ist;
wenn bestimmt wird, dass die auf Messungen für den zweiten Timer basierende auslösende Bedingung immer noch erfüllt ist, Bestimmen (208), ob die erste Zelle eine der mindestens einen Zelle ist, die für das bedingte Handover des Endgeräts vorbereitet ist; und
für den Fall, dass die erste Zelle eine der mindestens einen Zelle ist, die für das bedingte Handover vorbereitet ist, Starten (210) des zweiten Timers mit einem Wert, der kleiner als oder gleich einem vorbestimmten Wert ist,
andernfalls Starten (212) des zweiten Timers mit einem Wert, der größer als der vorbestimmte Wert ist.

2. Vorrichtung für ein Endgerät, wobei die Vorrichtung Mittel umfasst zu durchführen:
Erkennen (202) einer auf Messungen für einen zweiten Timer (420) basierenden auslösenden Bedingung in Bezug auf eine erste Zelle, wobei der zweite Timer dazu dient, einen Wiederherstellungsvorgangs oder ein Handover vor Ablauf eines ersten Timers (410) einzuleiten;
Empfangen, in einem Handover-Befehl von dem drahtlosen Kommunikationsnetz und vor dem Auslösen des ersten Timers, einer Angabe von mindestens einer Zelle, die für ein bedingtes Handover des Endgeräts vorbereitet ist;
Erkennen (204) einer auslösenden Bedingung für den ersten Timer und Starten des ersten Timers, wobei der erste Timer ein funkverbindungsfehlerbezogener Timer ist, und wobei das Erkennen der auf Messungen für den zweiten Timer basierenden auslösenden Bedingung vor dem Erkennen der auslösenden Bedingung für den ersten Timer durchgeführt wird;
auf der Grundlage des Erkennens der auslösenden Bedingung für den ersten Timer, Bestimmen, dass eine Dauer zwischen dem Erkennen der auslösenden Bedingungen für den ersten und den zweiten Timer größer als ein vorbestimmter Schwellenwert ist;
als Reaktion auf das Bestimmen, dass die Dauer größer als der vorbestimmte Schwellenwert ist, Bestimmen (510), ob die auf Messungen für den zweiten Timer basierende auslösende Bedingung für die erste Zelle immer noch erfüllt ist;
wenn bestimmt wird, dass die auf Messungen für den zweiten Timer basierende auslösende Bedingung immer noch erfüllt ist, Bestimmen (208), ob die erste Zelle eine der mindestens einen Zelle ist, die für das bedingte Handover des Endgeräts vorbereitet ist; und
für den Fall, dass die erste Zelle eine der mindestens einen Zelle ist, die für das bedingte Handover vorbereitet ist, Starten (210) des zweiten Timers mit einem Wert, der kleiner als oder gleich einem vorbestimmten Wert ist, oder
andernfalls Starten (212) des zweiten Timers mit einem Wert, der größer als der vorbestimmte Wert ist.

3. Vorrichtung nach Anspruch 2, die ferner Mittel umfasst zu durchführen:
Unterlassen des Startens des zweiten Timers, wenn die auf Messungen für den zweiten Timer basierende auslösende Bedingung nicht erfüllt ist.

4. Vorrichtung nach Anspruch 3, wobei die auf Messungen für den zweiten Timer basierende auslösende Bedingung nicht erfüllt ist, wenn die auf Messungen für den zweiten Timer basierende auslösende Bedingung zu dem Zeitpunkt des und/oder nach dem Erkennen der auslösenden Bedingung für den ersten Timer ungültig ist.

5. Vorrichtung nach einem der vorstehenden Ansprüche 2 bis 4, die weiter Mittel umfasst zu durchführen:
Einleiten, auf der Grundlage des zweiten Timerwerts, des Wiederherstellungsvorgangs oder des Handovers an die erste Zelle, für die die auf Messungen für den zweiten Timer basierende auslösende Bedingung erkannt wurde.

6. Vorrichtung nach einem der vorstehenden Ansprüche 2 bis 5, wobei der vorbestimmte Wert Null ist.

7. Vorrichtung nach einem der vorstehenden Ansprüche 2 bis 6, wobei der zweite Timer im Wesentlichen gleichzeitig mit dem ersten Timer gestartet wird.

8. Vorrichtung nach einem der vorstehenden Ansprüche 2 bis 7, wobei das Bestimmen, ob die auf Messungen für den zweiten Timer basierende auslösende Bedingung für die erste Zelle immer noch erfüllt ist, beim Starten des ersten Timers durchgeführt wird.

9. Vorrichtung nach einem der vorstehenden Ansprüche 2 bis 8, wobei der erste Timer ein T310-Timer ist und der zweite Timer ein T312-Timer ist.

10. Nichtflüchtiges computerlesbares Medium, das Programmbefehle enthält, die bei Ausführung durch eine Vorrichtung die Vorrichtung veranlassen, zumindest das Verfahren nach Anspruch 1 durchzuführen.

## Revendications

1. Procédé réalisé par un équipement utilisateur d'un réseau de communication sans fil, le procédé comprenant :
la détection (202) d'une condition de déclenchement basée sur les mesures d'un deuxième temporisateur (420) concernant une première cellule, dans lequel le deuxième temporisateur est destiné à initier une procédure de rétablissement ou un transfert intercellulaire avant l'expiration d'un premier temporisateur (410) ;
la réception, dans une commande de transfert intercellulaire du réseau de communication sans fil et avant le déclenchement du premier temporisateur, d'une indication d'au moins une cellule préparée pour un transfert intercellulaire conditionnel de l'équipement utilisateur ;
la détection (204) d'une condition de déclenchement du premier temporisateur et le démarrage du premier temporisateur, dans lequel le premier temporisateur est un temporisateur lié à une défaillance de liaison radio, et dans lequel la détection de la condition de déclenchement basée sur la mesure du deuxième temporisateur est réalisée avant de détecter la condition de déclenchement du premier temporisateur ;
en se basant sur la détection de la condition de déclenchement du premier temporisateur, la détermination du fait qu'une durée entre la détection de la condition de déclenchement du premier temporisateur et la détection de la condition de déclenchement du deuxième temporisateur est supérieure à un seuil prédéterminé ;
en réponse à la détermination du fait que la durée est supérieure au seuil prédéterminé, la détermination (206) précisant si la condition de déclenchement basée sur les mesures du deuxième temporisateur est toujours vraie pour la première cellule ;
en déterminant que la condition de déclenchement basée sur les mesures du deuxième temporisateur est toujours vraie, la détermination (208) précisant si la première cellule est l'une de la ou des cellules préparées pour le transfert intercellulaire conditionnel de l'équipement utilisateur ; et
dans le cas où la première cellule est l'une de la ou des cellules préparées pour le transfert intercellulaire conditionnel, le démarrage (210) du deuxième temporisateur avec une valeur qui est inférieure ou égale à une valeur prédéterminée,
sinon, le démarrage (212) du deuxième temporisateur avec une valeur supérieure à la valeur prédéterminée.

2. Appareil pour un équipement utilisateur, l'appareil comprenant des moyens pour effectuer :
la détection (202) d'une condition de déclenchement basée sur les mesures d'un deuxième temporisateur (420) concernant une première cellule, dans lequel le deuxième temporisateur est destiné à initier une procédure de rétablissement ou un transfert intercellulaire avant l'expiration d'un premier temporisateur (410) ;
la réception, dans une commande de transfert intercellulaire du réseau de communication sans fil et avant le déclenchement du premier temporisateur, d'une indication d'au moins une cellule préparée pour un transfert intercellulaire conditionnel de l'équipement utilisateur ;
la détection (204) d'une condition de déclenchement du premier temporisateur et le démarrage du premier temporisateur, dans lequel le premier temporisateur est un temporisateur lié à une défaillance de liaison radio, et dans lequel la détection de la condition de déclenchement basée sur les mesures du deuxième temporisateur est réalisée avant de détecter la condition de déclenchement du premier temporisateur ;
en se basant sur la détection de la condition de déclenchement du premier temporisateur, la détermination du fait qu'une durée entre la détection de la condition de déclenchement du premier temporisateur et la détection de la condition de déclenchement du deuxième temporisateur est supérieure à un seuil prédéterminé ;
en réponse à la détermination du fait que la durée est supérieure au seuil prédéterminé, la détermination (510) précisant si la condition de déclenchement basée sur les mesures du deuxième temporisateur est toujours vraie pour la première cellule ;
en déterminant que la condition de déclenchement basée sur les mesures du deuxième temporisateur est toujours vraie, la détermination (208) précisant si la première cellule est l'une de la ou des cellules préparées pour le transfert intercellulaire conditionnel de l'équipement utilisateur ; et
dans le cas où la première cellule est l'une de la ou des cellules préparées pour le transfert intercellulaire conditionnel, le démarrage (210) du deuxième temporisateur avec une valeur qui est inférieure ou égale à une valeur prédéterminée, ou
sinon, le démarrage (212) du deuxième temporisateur avec une valeur supérieure à la valeur prédéterminée.

3. Appareil de la revendication 2, comprenant en outre des moyens pour effectuer :
l'abstention de démarrer le deuxième temporisateur si la condition de déclenchement basée sur les mesures du deuxième temporisateur n'est pas vraie.

4. Appareil de la revendication 3, dans lequel la condition de déclenchement basée sur les mesures du deuxième temporisateur n'est pas vraie si la condition de déclenchement basée sur les mesures du deuxième temporisateur n'est pas valide au moment et/ou lors de la détection de la condition de déclenchement du premier temporisateur.

5. Appareil de l'une des revendications précédentes 2 à 4, comprenant en outre des moyens pour effectuer :
l'initiation, sur la base de la deuxième valeur de temporisateur, de la procédure de rétablissement ou du transfert intercellulaire vers la première cellule pour laquelle la condition de déclenchement basée sur les mesures du deuxième temporisateur a été détectée.

6. Appareil de l'une des revendications précédentes 2 à 5, dans lequel la valeur prédéterminée est zéro.

7. Appareil de l'une des revendications précédentes 2 à 6, dans lequel le deuxième temporisateur est démarré sensiblement en même temps que le premier temporisateur.

8. Appareil de l'une des revendications précédentes 2 à 7, dans lequel la détermination précisant si la condition de déclenchement basée sur les mesures du deuxième temporisateur est toujours vraie pour la première cellule se fait lors du démarrage du premier temporisateur.

9. Appareil de l'une des revendications précédentes 2 à 8, dans lequel le premier temporisateur est un Temporisateur T310 et le deuxième temporisateur est un temporisateur T312.

10. Support non transitoire lisible par ordinateur comprenant des instructions de programme qui, lorsqu'elles sont exécutées par un appareil, amènent l'appareil à effectuer au moins le procédé de la revendication 1.
